# EUROPÄISCHE PATENTANMELDUNG

(11) **EP 3 796 523 A1**
(43) Veröffentlichungstag der Anmeldung: **24.03.2021**
(21) Anmeldenummer: 20197226.2
(22) Anmeldetag: 21.09.2020
(51) Int. Cl.: H02K 1/20, H02K 1/18, H02K 5/18, H02K 7/18

(54) **STATORRING FÜR EINEN ELEKTRISCHEN GENERATOR UND ELEKTRISCHER GENERATOR MIT EINEM SOLCHEN STATORRING**

(30) Priorität: 19.09.2019 DE 102019006591
(71) Anmelder: Wobben Properties GmbH, 26607 Aurich (DE)
(72) Erfinder: Röer, Jochen, 27777 Ganderkesee (DE); Rosenbusch, Peter, 92500 RUEIL-MALMAISION (FR)
(74) Vertreter: Eisenführ Speiser

(57) **Zusammenfassung**

Die Erfindung betrifft einen Statorring für einen elektrischen Generator, insbesondere einen Synchrongenerator einer Windenergieanlage, mit
mindestens einem Stator-Blechpaket (17, 17'), das mehrere in Achsrichtung des Statorringes (11) hintereinander gestapelte Blechsegmente (19, 19', 29, 29') aufweist,
wobei in einem ersten, einem Rotor (5) des Generators (1) zugewandten radialen Abschnitt (21) des Blechpaketes (17, 17') eine Vielzahl von Statornuten (23) zum Aufnehmen der Statorwicklung vorgesehen sind, und
in einem dem ersten Abschnitt (21) entgegengesetzt angeordneten zweiten radialen Abschnitt (25) des Blechpaketes (17, 17') eine Vielzahl von Vorsprüngen (15, 15') zur Ausbildung von Kühlrippen (27) angeordnet sind.

Die Erfindung schlägt vor, dass die Vorsprünge (15, 15') am zweiten radialen Abschnitt (25) zu den jeweils in Achsrichtung benachbarten Vorsprüngen (15, 15') in Umfangsrichtung versetzt angeordnet und dazu eingerichtet sind, am zweiten radialen Abschnitt (25) eine wenigstens teilweise in Umfangsrichtung gerichtete Kühlluftströmung zu erzeugen.

## Beschreibung

Die Erfindung bezieht sich auf einen Statorring für einen elektrischen Generator, insbesondere einen Synchrongenerator einer Windenergieanlage, mit mindestens einem Stator-Blechpaket, das mehrere in Achsrichtung des Statorringes hintereinander gestapelte Blechsegmente aufweist, wobei in einem ersten, einem Rotor des Generators zugewandten radialen Abschnitt des Blechpaketes eine Vielzahl von Statornuten zum Aufnehmen der Statorwicklung vorgesehen sind, und in einem dem ersten Abschnitt entgegengesetzt angeordneten zweiten radialen Abschnitt des Blechpaketes eine Vielzahl von Vorsprüngen zur Ausbildung von Kühlrippen angeordnet sind. Die Erfindung betrifft ferner einen elektrischen Generator einer Windenergieanlage sowie eine Windenergieanlage.

Statorringe für elektrische Generatoren der vorbezeichneten Gattung sind bekannt und werden im Bereich der Windenergie eingesetzt, um mechanische Energie, beispielsweise in Form einer Drehbewegung, in elektrische Energie zu wandeln. Solche Statorringe werden in Generatoren eingesetzt, welche aus einem Generatorstator und einem relativ dazu drehbar aufgenommenen Generatorrotor, der auch als Läufer bezeichnet wird, bestehen. Der Statorring ist Teil des Generatorstators und umfasst mindestens ein Stator-Blechpaket, das mehrere in Achsrichtung des Statorringes hintereinander gestapelte Blechsegmente aufweist. Jeder Statorring weist ferner in einem ersten, dem Generatorrotor des Generators zugewandten radialen Abschnitt des Blechpaketes eine Vielzahl von Statornuten zum Aufnehmen der Statorwicklung auf. In der Statorwicklung wird insbesondere durch den an der Statorwicklung vorbeilaufenden Generatorrotor die elektrische Leistung induziert.

Bei der Induktion elektrischer Leistung entsteht in einem elektrischen Generator, insbesondere im Statorring, üblicherweise Wärme. Um etwaige mit zunehmender Entstehung von Wärme verbundene Leistungsverluste möglichst gering zu halten, ist eine effiziente Wärmeabfuhr an den bekannten elektrischen Generatoren erstrebenswert.

Aus dem Stand der Technik sind verschiedene Lösungen bekannt, um die entstehende Wärme aus dem Statorring abzuführen.

Beispielsweise sieht US 2011/210560 A1 an einem Statorring mehrere am zweiten radialen Abschnitt sich in Achsrichtung durch sämtliche Blechsegmente des Stator-Blechpaketes erstreckende Kühlausnehmungen vor.

Ein weiterer Stand der Technik sieht vor, an dem Statorring in einem dem ersten Abschnitt entgegengesetzt angeordneten zweiten radialen Abschnitt des Blechpaketes eine Vielzahl von Vorsprüngen zur Ausbildung von Kühlrippen anzuordnen. Mit Hilfe der Kühlrippen wird ein Kühlluftstrom in Achsrichtung entlang des zweiten radialen Abschnittes am Statorring geführt. Die vorbeschriebenen Kühlkonzepte werden hinsichtlich ihrer Funktionsweise als zufriedenstellend eingestuft. Dennoch besteht weiterhin der Bedarf, aufgrund der an einer Windenergieanlage steigenden erzeugten elektrischen Leistung, auch die Kühlleistung an einem Generator bzw. einem Statorring eines Generators der eingangs bezeichneten Art weiter zu verbessern.

Demzufolge lag der Erfindung die Aufgabe zugrunde, einen Statorring mit verbesserten Kühleigenschaften anzugeben.

Die Erfindung löst die ihr zugrundeliegende Aufgabe bei einem Statorring für einen elektrischen Generator, insbesondere einen Synchrongenerator einer Windenergieanlage, mit den Merkmalen nach Anspruch 1. Insbesondere sind die Vorsprünge am zweiten radialen Abschnitt zu den jeweils in Achsrichtung benachbarten Vorsprüngen in Umfangsrichtung versetzt angeordnet und dazu eingerichtet, am zweiten radialen Abschnitt eine wenigstens teilweise in Umfangsrichtung gerichtete Kühlluftströmung zu erzeugen.

Erfindungsgemäß wird hier der Ansatz verfolgt, mit den am zweiten radialen Abschnitt des Statorringes versetzt zueinander angeordneten Vorsprüngen die Wärmeübertragung vom Statorring auf die vorbeiströmende Luft zu verbessern. Bei Umströmung der Gondel in Achsrichtung erfährt die vorbeiströmende Luft eine Ablenkung in Umfangsrichtung von etwa 30°. Durch die versetzte Anordnung der Vorsprünge in Umfangsrichtung strömt die Kühlluft dann bevorzugt parallel entlang mittels der Vorsprünge ausgebildeter Kühlluftführungen. Zudem ist durch das versetzte Anordnen der Vorsprünge in Umfangsrichtung der Strömungsweg der Kühlluftströmung bevorzugt entlang des zweiten radialen Abschnittes am Statorring verlängert. Dadurch ist die Kühlwirkung an dem erfindungsgemäßen Statorring weiter verbessert. In einer bevorzugten Ausführungsform werden mittels der versetzt zueinander angeordneten Vorsprünge eine oder mehrere Kühlrippen oder eine Art Kühlkanäle am zweiten radialen Abschnitt ausgebildet, die in Achsrichtung des Statorringes und in radialer Umfangsrichtung des Statorringes verlaufen. Insbesondere verlaufen die Kühlrippen bzw. Kühlkanäle spiralförmig entlang des zweiten radialen Abschnittes am Statorring.

Vorliegend ist unter dem Begriff "in Achsrichtung" im Wesentlichen parallel zur Mittenachse des Statorringes bzw. in axialer Richtung des Statorringes verlaufend oder sich erstreckend zu verstehen.

Gemäß einer bevorzugten Weiterbildung des erfindungsgemäßen Statorringes sind die Vorsprünge jeweils an den hintereinander gestapelten Blechsegmenten angeordnet und vorzugsweise einstückig mit den Blechsegmenten ausgebildet. Bevorzugt weist jedes der hintereinander gestapelten Blechsegmente des mindestens einen Stator-Blechpaketes mindestens einen daran in radialer Richtung abstehenden Vorsprung auf. Jeder Vorsprung an einem der Blechsegmente ist in Umfangsrichtung versetzt zu einem Vorsprung des jeweils benachbarten Blechsegmentes angeordnet. Eine bevorzugte Weiterbildung sieht vor, dass jedes Blechsegment ein oder mehrere in radialer Richtung abstehende Vorsprünge aufweist, welche in einem vorgegebenen Abstand zueinander in Umfangsrichtung des Blechsegmentes gesehen zueinander beabstandet sind.

Vorzugsweise überdecken die Vorsprünge, in Achsrichtung gesehen, einander zumindest teilweise. Eine am zweiten Abschnitt des Statorringes mittels der Vorsprünge ausgebildete, vorstehende Kühlrippen weist bevorzugt Wandflächen auf, die beiderseits gestuft sind. Jede der am zweiten, radialen Abschnitt des Statorringes ausgebildeten Kühlrippen weist somit eine vergrößerte Oberfläche auf, an der gegebenenfalls auch Turbulenzen innerhalb eines von zwei Kühlrippen begrenzten Kühlkanals begünstigt werden. Aufgrund der erzeugten Turbulenzen kann die Wärmeabfuhr am Statorring weiter verbessert werden. In einer Ausführungsform des erfindungsgemäßen Statorringes weist jedes der hintereinander angeordneten Blechsegmente einen Vorsprung auf. Jeder Vorsprung steht bevorzugt mit einem Vorsprung eines jeweils in Achsrichtung unmittelbar benachbarten Blechsegmentes direkt in Kontakt.

Gemäß einer bevorzugten Ausgestaltung des Statorringes weist der oder weisen die Vorsprünge eines Blechsegmentes zu den Vorsprüngen eines nachfolgend deckungsgleich angeordneten Blechsegmentes einen Versatz in Umfangsrichtung zueinander auf. Die zur Ausbildung des Stator-Blechpaketes hintereinander angeordneten Blechsegmente sind, bezogen auf ihre das Blechsegment in Umfangsrichtung des Statorringes seitlich begrenzenden Seitenkanten, deckungsgleich zueinander angeordnet. Jedes der hintereinander angeordneten und zu einem Stator-Blechpaket zusammengesetzten Blechsegmente weist zu einem jeweils unmittelbar davor oder dahinter angeordneten Blechsegment durch die versetzten Vorsprünge eine abweichende äußere Form auf. Hingegen sind die Blechsegmente an ihrem ersten radialen Abschnitt mit ihren daran angeordneten Statornuten formidentisch ausgebildet. Damit sind die Statornuten der in Achsrichtung des Statorringes hintereinander gestapelten Blechsegmente deckungsgleich angeordnet und bilden bevorzugt sich parallel in Achsrichtung erstreckende Statornuten zum Aufnehmen der Statorwicklung aus.

Eine alternative Ausführungsform des erfindungsgemäßen Statorringes sieht vor, dass die Vorsprünge an den Blechsegmenten formidentisch abgebildet sind und die hintereinander gestapelten Blechsegmente mit einem Versatz in Umfangsrichtung zueinander ausgerichtet sind. Vorzugsweise weisen die Verbindungsbereiche mehrerer insbesondere stoffschlüssig miteinander zu einem Ringsegment verbundener Blechsegmente einen Versatz in Umfangsrichtung zueinander auf. Entgegen der vorherigen Ausführungsform können nunmehr die Statornuten am ersten radialen Abschnitt an den einzelnen hintereinander anzuordnenden Blechsegmenten mit einem Versatz zu den das Blechsegment in Umfangsrichtung seitlich begrenzenden Seitenkanten ausgebildet sein. Werden die Blechsegmente dann mit dem vorgegebenen Versatz in Umfangsrichtung zueinander angeordnet, verlaufen die Statornuten am ersten radialen Abschnitt des Blechsegmentes dann wiederum deckungsgleich hintereinander und parallel in Achsrichtung des Generators.

Gemäß einer bevorzugten Ausführungsform weist nur jeder zweite oder dritte der in Achsrichtung des Statorringes hintereinander angeordneten Blechsegmente einen oder mehrere in radialer Richtung am zweiten radialen Abschnitt des Blechsegmentes vorstehenden Vorsprung oder Vorsprünge auf. In weiteren erfindungsgemäßen Ausgestaltung ist jedes Dritte oder Vierte der hintereinander angeordneten Blechsegmente eines Stator-Blechpaketes vorsprungsfrei ausgebildet. Bevorzugt weisen dadurch die spiralförmig verlaufenden Kühlrippen am zweiten radialen Abschnitt der Blechsegmente einen in Längsrichtung unterbrochenen Verlauf auf.

Gemäß einer alternativen Ausführungsform des erfindungsgemäßen Statorringes weist das Stator-Blechpaket, anstatt der mit den Blechsegmenten einstückig ausgebildeten Vorsprünge, mehrere in Ausnehmungen angeordnete Kühlkörper mit daran radial vorstehenden Vorsprüngen auf. Vorzugsweise sind die in die Ausnehmungen am Stator-Blechpaket angeordneten Kühlkörper einzeln und damit als separate Bauteile zu den Blechsegmenten des Stator-Blechpaketes ausgebildet. In der einfachsten Ausführungsform des erfindungsgemäßen Statorringes ist ein jeweiliger Kühlkörper bevorzugt als stiftartiges Element ausgebildet. Mehrere solcher stiftartigen Elemente sind in mehreren axial zueinander beabstandeten und insbesondere entlang der Blechsegmente in Umfangsrichtung des Statorringes ausgebildeten Ausnehmungen am zweiten radialen Abschnitt des Blechpaketes angeordnet. Jeder Kühlkörper weist mindestens einen in die Ausnehmung einsetzbaren Fußabschnitt und einen am zweiten Abschnitt des Blechpaketes vorstehenden Zapfen als bevorzugt radial abstehenden Vorsprung auf.

Eine bevorzugte Ausführung der vorliegenden Erfindung sieht vor, dass die Kühlkörper bereichsweise in Umfangsrichtung des Statorringes verlaufend in nutartigen Ausnehmungen an den hintereinander gestapelten Blechsegmenten angeordnet sind. Mit Hilfe der sich über einen entsprechenden Bereich des Umfangs in den Ausnehmungen erstreckenden Kühlkörper kann die Kühlwirkung weiter verbessert werden, wobei jeder Kühlkörper als eine Art Kühlblech entlang der Ausnehmung erstreckt und mehrere daran vorstehende Vorsprünge aufweist. Um den Versatz der Vorsprünge am zweiten radialen Abschnitt der Blechsegmente zu erzielen, weisen die nutartigen Ausnehmungen um die Längsachse des Statorringes zueinander einen vorgegebenen Versatz auf. In einer Ausführungsform weist der Statorring am zweiten radialen Abschnitt seiner Blechsegmente mehrere in Achsrichtung zueinander beabstandete Ausnehmungen für die darin einzusetzenden Kühlkörper auf.

Gemäß einer bevorzugten Ausführungsform sind die die Kühlrippen ausbildenden Vorsprünge unterschiedlicher Kühlkörper in Achsrichtung beabstandet zueinander angeordnet. Die axial und bevorzugt in Umfangsrichtung versetzt zueinander angeordneten Vorsprünge der unterschiedlichen Kühlbleche bilden damit Prallflächen für die entlang des zweiten radialen Abschnitts der Blechsegmente geführte Kühlluftströmung aus. Damit entstehen bevorzugt Turbulenzen, wodurch die Kühlleistung der in Achsrichtung im Abstand und in Umfangsrichtung versetzt zueinander angeordneten Vorsprünge verbessert wird. In einer bevorzugten Ausführung stehen die Vorsprüngen in Achsrichtung stufenartig versetzt an dem zweiten radialen Abschnitt des Statorringes ab. Bevorzugt weisen die Ausnehmungen in Achsrichtung der hintereinander angeordneten Blechsegmente eine Breite auf, welche ungefähr der Breite eines Blechsegmentes oder dem Vielfachen der Breite eines Blechsegmentes entspricht. Bevorzugt können die in den nutartigen Ausnehmungen aufgenommenen Kühlkörper zwischen den hintereinander gestapelten Blechsegmenten ohne Zwischenschaltung weiterer Klemmkörper klemmend in den Ausnehmungen gehalten werden.

Eine bevorzugte Weiterbildung des erfindungsgemäßen Statorringes sieht vor, dass die Kühlkörper aus einem Material bestehen, das eine höhere Wärmeleitfähigkeit aufweist als das Material für die Statorbleche, wobei vorzugsweise die Wärmeleitfähigkeit des Materials für die Kühlkörper (W_{LK}) zur Wärmeleitfähigkeit des Materials für die Blechsegmente (W_{LB}) ein Verhältnis W_{LK/}W_{LB} im Bereich von 1,5 oder mehr, besonders bevorzugt von 1,5 bis 3,5 aufweist. Mit Hilfe der am zweiten radialen Abschnitt der Blechsegmente zwischen einzelnen Blechsegmenten aufgenommenen und in Kontakt stehenden Kühlkörper erfolgt ein verbesserter Wärmetransport in Richtung des zweiten radialen Endes, entlang dessen bevorzugt eine Kühlluftströmung geführt wird. Mittels der vorzugsweise als Kühlbleche ausgebildeten Kühlkörper, welche bevorzugt aus einem Aluminiumwerkstoff ausgebildet sind, der im Vergleich zu den Statorblechen eine Wärmeleitfähigkeit aufweist, die etwa dreimal so groß ist, kann die im Bereich der Statorwicklung des Generators entstehende Wärme beschleunigt abgezogen und in Richtung des zweiten radialen Abschnitts abgeführt werden.

Gemäß einer bevorzugten Weiterbildung weist das Stator-Blechpaket eine erste Gruppe Blechsegmente und eine zweite Gruppe Blechsegmente auf, wobei die Blechsegmente der zweiten Gruppe eine zu den Blechsegmenten der ersten Gruppe verringerte Blechhöhe zur Ausbildung der Ausnehmungen aufweisen, wobei bevorzugt die Blechsegmente der ersten und zweiten Gruppe abwechselnd hintereinander angeordnet sind. Damit ist eine einfache Ausgestaltung der Ausnehmungen zum Aufnehmen der Kühlbleche am zweiten radialen Abschnitt der Blechsegmente bzw. des mittels der Blechsegmente ausgebildeten wenigstens einen Stator-Blechpaketes erreicht. Bevorzugt wechseln sich die Blechsegmente mit "normaler" Blechhöhe und "verringerter" Blechhöhe ab. In einer Ausführungsform kann die Anzahl der hintereinander angeordneten Blechsegmente mit "normaler" Blechhöhe und mit "verringerter" Blechhöhe unterschiedlich sein. Die Breite der Ausnehmungen in Achsrichtung des Statorringes kann somit zur Breite der Abschnitte des Statorringes zwischen zwei Ausnehmungen verschieden sein.

Vorzugsweise sind die Blechsegmente der zweiten Gruppe im Vergleich zu den Blechsegmenten der ersten Gruppe nur aus dem ersten radialen Abschnitt mit den daran ausgebildeten Statornuten und einem benachbart angeordneten magnetischen Joch ausgebildet. Damit umfassen die Blechsegmente der zweiten Gruppe zumindest den elektrisch wirksamen Teil zur Erzeugung der elektrischen Leistung am Generator. Bevorzugt sind die Blechsegmente der zweiten Gruppe mit ihrer verringerten Blechhöhe zwischen den Blechsegmenten der ersten Gruppe in Achsrichtung klemmend aufgenommen. Vorzugsweise weisen die Blechsegmente mit der "normalen" Blechhöhe im Bereich des zweiten radialen Abschnitts in Achsrichtung des Statorringes verlaufende Durchbrüche auf, durch die entsprechende Befestigungsmittel zum Arretieren der hintereinander gestapelten Blechsegmente vorgesehen sind. Derartige Durchbrüche zum Hindurchführen von Befestigungsmitteln weisen auch solche Blechsegmente auf, die am zweiten radialen Abschnitt insbesondere damit einstückig ausgebildete und daran vorstehende Vorsprünge aufweisen.

Vorzugsweise weisen die Kühlkörper einen zwischen den Blechsegmenten der ersten Gruppe zu klemmenden Fußabschnitt auf, der Durchbrüche zum Aufnehmen von Befestigungsmitteln zum Fixieren der Kühlkörper mit den Blechsegmenten aufweist. Damit ist eine sichere Arretierung der separat ausgebildeten Kühlkörper zwischen den Blechsegmenten mit "normaler" Blechhöhe gewährleistet. Bevorzugt weisen die Kühlbleche Durchbrüche in Form eines sich in Längsrichtung der Kühlkörper, insbesondere des Fußabschnittes erstreckenden Langloches auf. Der Fußabschnitt der Kühlkörper ist zudem bevorzugt derart zwischen den Blechsegmenten der ersten Gruppe aufgenommen, dass der Fußabschnitt nicht über den zweiten radialen Abschnitt an den Blechsegmenten mit ihrer "normalen" Blechhöhe vorstehen. Bevorzugt schließt der Fußabschnitt mit seiner Fläche, an der die Vorsprünge abstehen, bündig mit der den zweiten radialen Abschnitt begrenzenden Fläche am Blechsegment der ersten Gruppe ab.

In einer bevorzugten Ausführungsform weist der Fußabschnitt ein Tiefenmaß in Achsrichtung auf, das größer als das Tiefenmaß der daran radial vorstehenden Vorsprünge ist. Bevorzugt sind die Vorsprünge jeweils im Abstand zu den mit den benachbart angeordneten Blechsegmenten in Kontakt stehenden Seitenflächen des Fußabschnittes angeordnet. Insbesondere wird die Fläche am zweiten radialen Abschnitt der Blechsegmente und der in den Ausnehmungen angeordneten Kühlkörper mittels einer Schutzschicht, wie beispielsweise einem Harz oder einem Lack, überzogen. Mittels der an der Umfangsfläche aufgebrachten Schutzschicht ist beispielsweise das Eindringen von Feuchtigkeit zwischen die Spalte der hintereinander angeordneten Blechsegmente oder Blechsegmente und Kühlkörper behindert. Insbesondere mittels des verbreiterten Fußabschnittes und der den Fußabschnitt abdeckenden Schutzschicht ist das Risiko des Auftretens einer Leckage an dem mit den an der Umfangsfläche vorstehenden Vorsprüngen angrenzenden Rand der Schutzschicht minimiert.

Gemäß einer bevorzugten Ausgestaltung des erfindungsgemäßen Statorringes bilden der zweite radiale Abschnitt der Blechsegmente mit seinen Vorsprüngen und/oder die Kühlkörper mit den daran vorstehenden Vorsprüngen jeweils den Außenumfang des Statorringes aus. Bevorzugt bildet die Umfangsfläche am zweiten radialen Abschnitt mit den daran vorstehenden Vorsprüngen die Außenfläche des Stators eines erfindungsgemäßen Generators aus, entlang dessen die Kühlluftströmung geführt wird. Auf das konstruktiv aufwendige Ausbilden von Kühlkanälen innerhalb der Blechsegmente, wie es im Stand der Technik vorgenommen wird, kann vorliegend verzichtet werden. Bevorzugt wird ein solcher erfindungsgemäßer Statorring zum Aufnehmen eines als Innenläufer ausgebildeten Generatorrotors verwendet. In einer alternativen Ausführungsform kann der zweite radiale Abschnitt der Blechsegmente mit seinen Vorsprüngen und/oder Kühlkörpern den Innenumfang des Statorringes definieren. Die Kühlluftströmung ist dann durch einen inneren Bereich des Generators zu führen. Bei passiver Kühlung erfolgt das Erzeugen der Kühlluftströmung im Generator, vorzugsweise durch den Wind. Bei einer aktiven Kühling wird die Kühlluftströmung vorzugsweise mit Hilfe von Lüftern in der Windenergieanlage erzeugt. Ein solcher Statorring wird in Verbindung mit einem Generatorrotor verwendet, der außenseitig um den Generatorstator umlaufend angeordnet ist. Ein außen um den Generatorstator umlaufender Generatorrotor wird auch als Außenläufer bezeichnet.

Eine bevorzugte Weiterbildung des erfindungsgemäßen Statorringes sieht vor, dass zwischen dem ersten und dem zweiten radialen Abschnitt an den Blechsegmenten ein Tragabschnitt angeordnet ist, mittels dessen und/oder des Tragabschnittes der Kühlkörper eine Tragstruktur für einen selbsttragend ausgebildeten Statorring ausgebildet wird. Insbesondere wird mittels solch erfindungsgemäß ausgebildeter Tragabschnitte an den Blechsegmenten eine derart feste Tragstruktur am Statorring erzeugt, die eine zusätzliche, externe Konstruktion zum Aufnehmen und Versteifen des Statorringes entbehrlich macht. Mittels des Tragabschnittes sind die Blechsegmente jeweils derart selbsttragend ausgebildet, dass keine Anbauteile benötigt werden, um die mechanische Integrität des mittels der Blechsegmente ausgebildeten Statorringes sicherzustellen. Der Tragabschnitt ist insbesondere zwischen dem zweiten radialen Abschnitt mit seinen Vorsprüngen zum Kühlen des Stators und dem magnetischen Joch ausgebildet, welches seinerseits zwischen dem Tragabschnitt und dem ersten radialen Abschnitt mit den Statornuten angeordnet ist.

Gemäß einer bevorzugten Weiterbildung weist der Tragabschnitt jedes Blechsegmentes mehrere unter einem Winkel zueinander geneigt verlaufende Versteifungsstreben auf, welche zur Aufnahme von Druck-, Zug- und Schubkräften eingerichtet sind. Benachbart zu den Versteifungsstreben des Tragabschnittes sind entsprechende Ausnehmungen vorgesehen, welche bevorzugt den Effekt der Gewichtsreduktion des Statorringes im Bereich des Tragabschnittes haben.

Die Erfindung betrifft in einem weiteren Aspekt einen elektrischen Generator, insbesondere einen langsam drehenden Synchron-Ringgenerator einer Windenergieanlage, mit einem Generatorstator und einem Generatorrotor, relativ drehbar zum Generatorstator. Der erfindungsgemäße Generator löst die eingangs beschriebene Aufgabe unter Verwendung eines Generatorstators mit einem Statorring nach einer der vorstehend beschriebenen bevorzugten Ausführungsformen. Die Erfindung macht sich hierbei die Erkenntnis zunutze, dass mittels des erfindungsgemäß ausgebildeten Statorringes mit seinen am zweiten radialen Abschnitt der Blechsegmente vorstehenden Vorsprüngen eine verbesserte Kühlwirkung durch eine entlang der Umfangsfläche geführte Kühlluftströmung erreicht wird. Die bei der Gewinnung der elektrischen Leistung entstehende Wärmeenergie kann gezielt und effizient in Richtung der Umfangsfläche am zweiten radialen Abschnitt des Statorringes transportiert und durch die daran entlangströmende Kühlluft abgegeben werden. Mittels der versetzten Anordnung der Vorsprünge strömt die Kühlluft bevorzugt spiralförmig entlang der Umfangsfläche am zweiten radialen Abschnitt des Statorringes und bleibt damit länger in Kontakt mit dem zu kühlenden zweiten radialen Abschnitt des Statorringes.

Die Erfindung wird dadurch weitergebildet, dass der Generatorrotor als Innenläufer ausgebildet ist. Die entsprechend mit dem Kühlluftstrom in Kontakt zu bringende Umfangsfläche des Statorringes bildet demnach dessen äußere Umfangsfläche aus, welche vereinfacht mit einem entsprechenden Kühlluftstrom beaufschlagt werden kann, als es bei einem Statorring möglich ist, an dem die Vorsprünge an der inneren Umfangsfläche des Statorringes radial nach innen hin abstehend angeordnet sind.

Gemäß einem weiteren Aspekt betrifft die vorliegende Erfindung eine Windenergieanlage, insbesondere eine getriebelose Windenergieanlage, mit einem Turm, einer auf dem Turm drehbar angeordneten Gondel, einer drehbar an der Gondel gelagerten Nabe mit einer Anzahl von Rotorblättern und einem Generator zur Bereitstellung elektrischer Energie, der einen mit der Nabe verbundenen Generatorrotor und einen mit der Gondel verbundenen Generatorstator aufweist.

Die Windenergieanlage zeichnet sich durch einen Generator gemäß einer der vorstehend beschriebenen bevorzugten Ausführungsformen aus, wobei vorzugsweise der Statorring mit an seinem Außenumfang vorstehenden in Umfangsrichtung versetzt angeordneten Vorsprüngen Bereiche der Außenkontur der Gondel ausbildet. Der Statorring der erfindungsgemäßen Windenergieanlage bildet mit seiner äußeren Umfangsfläche und den an der äußeren Umfangsfläche vorstehenden Vorsprüngen bevorzugt eine direkte Anströmfläche für die bereits die Rotorblätter passierte Luftströmung. Eine erzwungene, separat mittels Ventilatoren erzeugte Luftströmung zum Kühlen des Statorringes ist damit nicht notwendig. Die versetzt an der Außenkontur des Statorringes vorstehenden Vorsprünge und die gegebenenfalls spiralförmig an der äußeren Umfangsfläche des Statorringes verlaufenden Kühlrippen werden direkt von einem Teil der das Rotorblatt fortwährend passierenden Luftströmung angeströmt. Damit ist ein effizienter Abtransport der bei der Energieerzeugung entstehenden Abwärme erreicht.

Die zum erfindungsgemäßen Statorring beschriebenen, bevorzugten Ausführungsformen bzw. Weiterbildungen sind zugleich auch bevorzugte Ausführungsformen des erfindungsgemäßen Generators sowie der erfindungsgemäßen Windenergieanlage. Die den Generator bzw. die Windenergieanlage betreffenden als bevorzugt beschriebenen Ausführungsformen bzw. Weiterbildungen, welche sich auf den Statorring beziehen, sind zugleich auch bevorzugte Ausführungsformen des Statorringes.

Die Erfindung wird anhand eines bevorzugten Ausführungsbeispiels unter Bezugnahme auf die beigefügten Figuren näher beschrieben. Hierbei zeigen:
- Fig. 1:: eine perspektivische Ansicht einer schematisch dargestellten Windenergieanlage;
- Fig. 2:: eine Gondel der Windenergieanlage gemäß Fig. 1 mit einem erfindungsgemäßen Generator schematisch in einer perspektivischen Schnittdarstellung;
- Fig. 3:: eine perspektivische Ansicht eines ersten Ausführungsbeispiels eines erfindungsgemäßen Statorringes;
- Fig. 4:: eine perspektivische Ansicht eines weiteren Ausführungsbeispiels eines erfindungsgemäßen Statorringes;
- Fig. 4a:: eine Ansicht eines Blechsegmentes zur Ausbildung des erfindungsgemäßen Statorringes nach Fig. 4;
- Fig. 4b:: eine Ansicht eines zweiten Blechsegmentes zur Ausbildung eines erfindungsgemäßen Statorringes nach Fig. 4 mit einem daran angeordneten Kühlblech;
- Fig. 5a und b:: Schnittdarstellungen verschiedener Ausführungsformen des erfindungsgemäßen Statorringes nach Fig. 4 im Querschnitt.

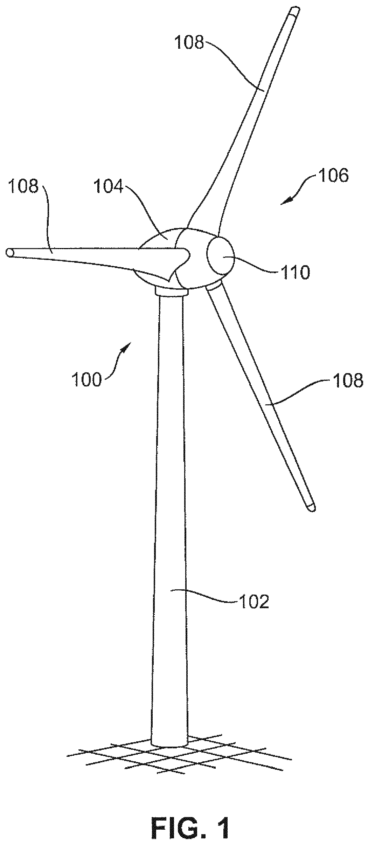

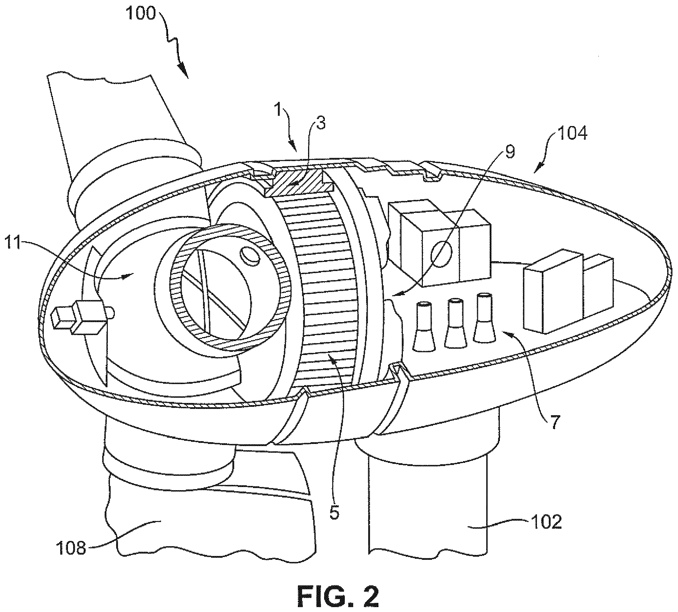

Fig. 1 zeigt eine Windenergieanlage 100 mit einem Turm 102 und einer Gondel 104. An der Gondel 104 ist ein Rotor 106 mit drei Rotorblättern 108 und einem Spinner 110 angeordnet. Der Rotor 106 wird in Betrieb durch den Wind in eine Drehbewegung versetzt und treibt dadurch einen Generator 1 (Fig. 2) in der Gondel 104 an.

Die Gondel 104 ist in Fig. 2 im Detail gezeigt. Die Gondel 104 ist drehbar an dem Turm 102 montiert und mittels eines Azimutantriebs 7 in allgemein bekannter Weise angetrieben verbunden. In ferner allgemein bekannter Weise ist in der Gondel 104 ein Maschinenträger 9 angeordnet, der einen Synchrongenerator 1 hält. Der Synchrongenerator 1 ist gemäß der vorliegenden Erfindung ausgebildet und ist insbesondere ein langsam drehender, vielpoliger Synchron-Ringgenerator. Der Synchrongenerator 1 weist einen Stator 3 und einen innen laufenden Rotor 5 auf, auch bezeichnet als Läufer. Der Rotor beziehungsweise Läufer 5 ist mit einer Rotornabe 11 verbunden, die die durch den Wind verursachte Rotationsbewegung der Rotorblätter 108 an den Synchrongenerator 1 überträgt.

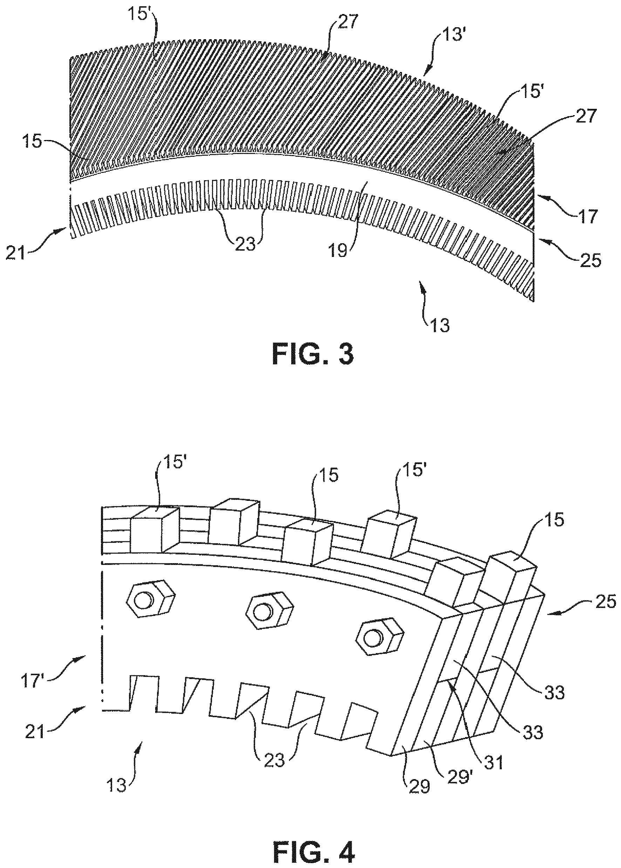

Der Stator 3, wie aus Fig. 3 ersichtlich, umfasst einen Statorring 13, der an seiner äußeren Umfangsfläche 13' eine Vielzahl an Vorsprüngen 15, 15' zur Ausbildung von Kühlrippen 27 aufweist, welche in Umfangsrichtung versetzt angeordnet und dazu eingerichtet sind, an der äußeren Umfangsfläche 13' des Statorringes 13 eine bevorzugt spiralförmig entlang der Umfangsfläche 13' gerichtete Kühlluftströmung zu erzeugen.

Fig. 3 zeigt ferner den Statorring 13 im Detail, der aus mindestens einem Stator-Blechpaket 17 ausgebildet ist. Das Stator-Blechpaket 17 weist jeweils mehrere in Achsrichtung des Statorringes 13 hintereinander gestapelte Blechsegmente 19 auf. Wie aus Fig. 3 weiterhin ersichtlich, weist das Stator-Blechpaket 17 in einem ersten dem Rotor 5 (Fig. 2) des Generators 1 zugewandten ersten radialen Abschnitt 21 des Blechpaketes 17 eine Vielzahl von Statornuten 23 zum Aufnehmen einer nicht näher gezeigten Statorwicklung auf. Die Statorwicklung ist in Form von Leiterbündeln in den Statornuten 23 untergebracht. In einem dem ersten Abschnitt 21 entgegengesetzt angeordneten zweiten radialen Abschnitt 25 des Blechpaketes 17 sind die Vielzahl von Vorsprüngen 15, 15' zur Ausbildung von in der vorliegend gezeigten Ausführungsform spiralförmig verlaufenden Kühlrippen 27 angeordnet.

Wie aus der in Fig. 3 gezeigten Ausführungsform ferner ersichtlich, sind die Vorsprünge 15, 15' an den hintereinander gestapelten Blechsegmenten 19 einstückig ausgebildet. In der gezeigten Ausführungsform überdecken die Vorsprünge 15, 15' in Achsrichtung des Statorringes 13 gesehen einander zumindest teilweise, wodurch mittels der versetzt angeordneten Vorsprünge 15, 15' gestufte Wandflächen an den Kühlrippen 27 ausgebildet sind.

Bevorzugt werden mehrere Segmentbleche miteinander verschweißt und zu einem einstückigen, ringförmigen Blechsegment 19 ausgebildet, das zusammen mit den weiteren hintereinander gestapelten ringförmigen Blechsegmenten das Stator-Blechpaket 17 ausbildet. Zur Ausbildung des Versatzes der Vorsprünge 15, 15' am zweiten radialen Abschnitt 25 des Blechpaketes in Achsrichtung des Statorringes zueinander werden die Vorsprünge eines Blechsegmentes 19 zu den Vorsprüngen eines nachfolgend oder vorhergehend angeordneten Blechsegmentes eines Stator-Blechpaketes mit einem Versatz in Umfangsrichtung an den jeweiligen Blechsegmenten ausgebildet. Alternativ können die Vorsprünge 15, 15' an sämtlichen Blechsegmenten 19 formidentisch ausgebildet sein, wobei dann die hintereinander gestapelten Blechsegmente mit einem Versatz in Umfangsrichtung relativ zueinander angeordnet werden. Die einzeln hergestellten Blechsegmente 19, welche untereinander aus mehreren Segmentblechen zu bevorzugt einem ringförmigen Blechsegment verschweißt werden, überlappen einander geringfügig, um den Versatz der Vorsprünge 15, 15' in Umfangsrichtung am zweiten radialen Abschnitt des Statorringes 13 zu generieren.

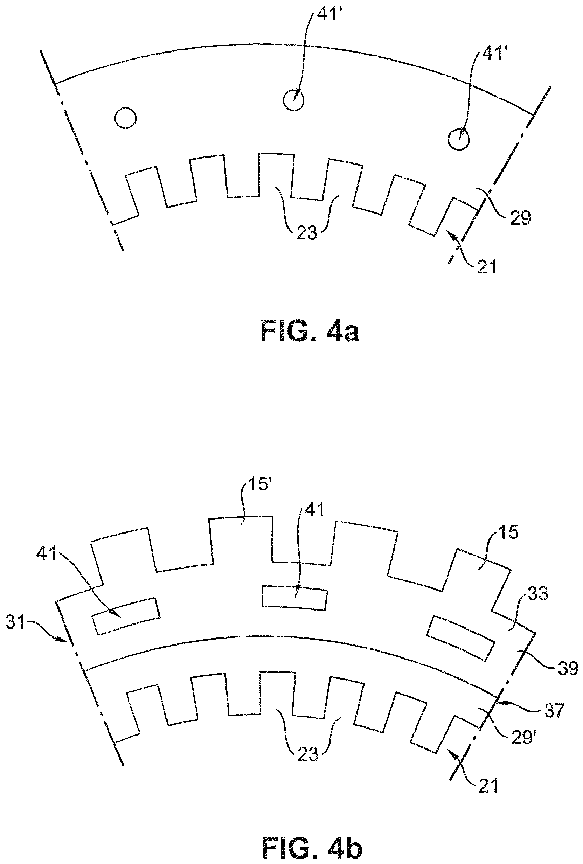

Fig. 4 zeigt eine alternative Ausführungsform eines Stator-Blechpaketes 17', das aus hintereinander gestapelten Blechsegmenten 29, 29' besteht, die derart ausgebildet sind, dass nutartige Ausnehmungen 31 am zweiten radialen Abschnitt 25 ausgebildet sind, in die Kühlkörper 33 mit daran radial vorstehenden Vorsprüngen 15, 15' eingesetzt werden. Wie aus Fig. 4 weiter ersichtlich, sind die Kühlkörper 33 in vorgegebenen Abständen in Achsrichtung des Stator-Blechpaketes 17' zueinander angeordnet, mit denen bei der Erzeugung der elektrischen Leistung entstehende Abwärme aus dem ersten radialen Abschnitt 21 in Richtung des zweiten radialen Abschnitts 25 am Stator-Blechpaket 17' abgeleitet wird.

Die Vorsprünge 15, 15' an einem Kühlkörper weisen in Umfangsrichtung einen vorgegebenen Abstand zueinander auf, wie auch die Vorsprünge der verschiedenen Kühlkörper 33 in Achsrichtung einen vorbestimmten Abstand zueinander aufweisen. Durch den Versatz der Vorsprünge 15, 15' an den hintereinander angeordneten Kühlkörper 33 ist eine Art Treppenkörper ausgebildet. Die einzeln am zweiten radialen Abschnitt des Stator-Blechpaketes 17' vorstehenden Vorsprünge 15, 15' erhöhen die Turbulenzen in einer entlang der Umfangsfläche 13' am zweiten radialen Abschnitt 25 geführten Kühlluftströmung, wodurch die Kühlwirkung trotz einer relativ verringerten Kühlfläche am erfindungsgemäßen Statorring 13 verbessert wird.

In einer Ausführungsform der Erfindung sind die Kühlkörper 33 aus einem Material ausgebildet, das im Vergleich zum Material der Blechsegmente 29 eine Wärmeleitfähigkeit aufweist, die um etwa 1,5- bis 3,5-fach höher ist.

Wie aus den Fig. 4a und b ersichtlich, ist das Stator-Blechpaket 17' aus unterschiedlichen Blechsegmenten 29, 29' ausgebildet. Das Blechsegment 29 der in Fig. 4a gezeigten, ersten Gruppe umfasst den ersten radialen Abschnitt 21 mit den Statornuten 23 und den zweiten radialen Abschnitt 25, der vorliegend die Außenseite des Statorringes 13 definiert und vorsprungsfrei ausgebildet ist. Zwischen dem ersten und dem zweiten radialen Abschnitt 21, 25 erstreckt sich das magnetische Joch 37.

Insbesondere weisen die Blechsegmente 29' der zweiten Gruppe im Vergleich zu den Blechsegmenten 29 der ersten Gruppe eine verringerte Blechhöhe in radialer Richtung des Statorringes 13 auf. Die durch die verringerte Blechhöhe entstehenden Ausnehmungen 31 an dem Blechsegment 29' der zweiten Gruppe wird von den Kühlkörpern 33 mit den radial vorstehenden Vorsprüngen 15, 15' ausgefüllt. Die Blechsegmente 29' der zweiten Gruppe bestehen in der in Fig. 4b gezeigten Ausführungsform nur aus dem ersten radialen Abschnitt mit den Statornuten 23 und einem benachbart zum ersten radialen Abschnitt angeordneten magnetischen Joch 37.

Die radial außenseitig auf die Blechsegmente 29' der zweiten Gruppe ansetzenden Kühlkörper 33 weisen einen Fußabschnitt 39 auf. Am Fußabschnitt 39 sind mehrere Durchbrüche 41 zum Aufnehmen von Befestigungsmitteln der Kühlbleche zwischen den Blechsegmenten vorgesehen. Die Durchbrüche 41 sind in der vorliegenden Ausführungsform als Langlöcher ausgeführt. Damit können identisch ausgebildete Kühlkörper 33 an verschiedenen Positionen in Achsrichtung am zweiten radialen Abschnitt des Stator-Blechpaketes 17' und damit in Umfangsrichtung versetzt zu den Blechsegmenten 29, 29' angeordnet werden. In den Blechsegmenten 29 der ersten Gruppe sind ebenfalls Durchbrüche 41' zum Aufnehmen jeweils eines Befestigungsmittels vorgesehen.

In einer nicht näher gezeigten Ausführungsform können die Blechsegmente 19, 19', 29, 29' mit einem zwischen dem ersten und dem zweiten radialen Abschnitt 21, 25 angeordneten Tragabschnitt ausgerüstet sein, der statt aus Vollmaterial bestehend mehrere im Winkel zueinander verlaufende Versteifungsstreben aufweist. Wie aus der in Fig. 4 gezeigten Ausführungsform zu entnehmen, weisen die Kühlkörper 33 eine Stärke in Achsrichtung des Stator-Blechpaketes 17' auf, die in etwa der Stärke eines Blechsegmentes entspricht.

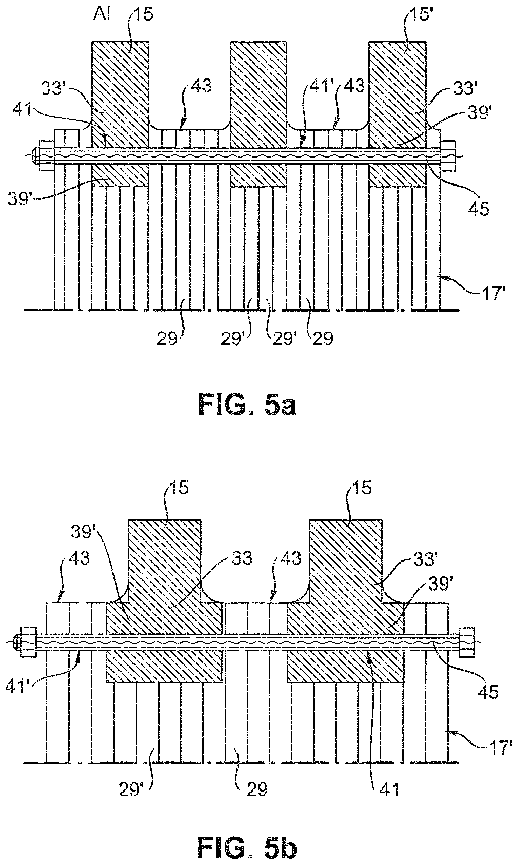

Die Fig. 5a und b zeigen alternative Ausgestaltungen eines Stator-Blechpaketes 17' im Querschnitt. Wie Fig. 5a zeigt, kann die Stärke der in die Ausnehmungen 31 am zweiten radialen Abschnitt 25 eingesetzten Fußabschnitte 39' der Kühlkörper 33' größer als die Stärke der Blechsegmente 29, 29' sein, insbesondere einem ganzen Vielfachen der Stärke der Blechsegmente 29, 29' entsprechen. In einer weiteren in Fig. 5b gezeigten Ausführungsform weisen die Kühlkörper 33' einen Fußabschnitt 39' auf, der in Achsrichtung ein Tiefenmaß hat, das größer als das Tiefenmaß der daran radial vorstehenden Vorsprünge 15, 15' ist.

Die in Fig. 5b gezeigte Ausführungsform hat den Vorteil, dass insbesondere, wenn die äußere Umfangsfläche 13' des Statorringes 13 zumindest teilweise die Außenkontur der Gondel der Windenergieanlage definiert, von einer Schutzschicht 43 in Form eines Lackes oder Harzes abgedeckt werden kann und das Eindringen von Feuchtigkeit in die Spalte zwischen die einzelnen Blechsegmente 29, 29' durch die den Fußabschnitt 39' am Kühlkörper 33' bevorzugt überdeckende Schutzschicht 43 behindert wird. Wie ferner aus den Fig. 5a und 5b ersichtlich, werden die hintereinander angeordneten Blechsegmente mit Hilfe sich durch Durchbrüche 41, 41' in den Blechsegmenten 29 und die Kühlkörper 33' das gebildete Stator-Blechpaket 17' erstreckende Befestigungsmittel 45 fixiert.

Auch bei der in Fig. 3 gezeigten Ausführungsform werden die zu einem Stator-Blechpaket hintereinander gestapelten Blechsegmente 19, 19' mit einem beispielhaft in den Fig. 5a und 5b gezeigten Befestigungsmittel zueinander arretiert bzw. fixiert.

### Bezugszeichenliste:

- 1: Synchrongenerator
- 3: Stator
- 5: Läufer
- 7: Azimutantrieb
- 9: Maschinenträger
- 11: Rotornabe
- 13: Statorring
- 13': Umfangsfläche
- 15, 15': Vorsprung
- 17, 17': Stator-Blechpaket
- 19, 19': Blechsegment
- 21: erster Abschnitt
- 23: Statornuten
- 25: zweiter Abschnitt
- 27: Kühlrippen
- 29, 29': Blechsegment
- 31: Ausnehmung
- 33, 33': Kühlkörper
- 37: magnetisches Joch
- 39, 39': Fußabschnitt
- 41: Durchbruch
- 43: Schutzschicht
- 45: Befestigungsmittel
- 100: Windenergieanlage
- 102: Turm
- 104: Gondel
- 106: Rotor
- 108: Rotorblatt
- 110: Spinner

## Patentansprüche

1. Statorring für einen elektrischen Generator, insbesondere einen Synchrongenerator einer Windenergieanlage, mit
mindestens einem Stator-Blechpaket (17, 17'), das mehrere in Achsrichtung des Statorringes (11) hintereinander gestapelte Blechsegmente (19, 19', 29, 29') aufweist, wobei in einem ersten, einem Rotor (5) des Generators (1) zugewandten radialen Abschnitt (21) des Blechpaketes (17, 17') eine Vielzahl von Statornuten (23) zum Aufnehmen der Statorwicklung vorgesehen sind, und
in einem dem ersten Abschnitt (21) entgegengesetzt angeordneten zweiten radialen Abschnitt (25) des Blechpaketes (17, 17') eine Vielzahl von Vorsprüngen (15, 15') zur Ausbildung von Kühlrippen (27) angeordnet sind,
**dadurch gekennzeichnet,**
**dass** die Vorsprünge (15, 15') am zweiten radialen Abschnitt (25) zu den jeweils in Achsrichtung benachbarten Vorsprüngen (15, 15') in Umfangsrichtung versetzt angeordnet und dazu eingerichtet sind, am zweiten radialen Abschnitt (25) eine wenigstens teilweise in Umfangsrichtung gerichtete Kühlluftströmung zu erzeugen.

2. Statorring nach Anspruch 1,
wobei die Vorsprünge (15, 15') jeweils an den hintereinander gestapelten Blechsegmenten (19, 19') angeordnet sind, und vorzugsweise einstückig mit den Blechsegmenten (19, 19') ausgebildet sind.

3. Statorring nach Anspruch 1 oder 2,
**dadurch gekennzeichnet, dass** die Vorsprünge (15, 15'), in Achsrichtung gesehen, zumindest teilweise einander überdecken, wobei bevorzugt die mittels der versetzt angeordneten Vorsprünge (15, 15') ausgebildeten Wandflächen der Kühlrippen (27) beiderseits gestuft sind.

4. Statorring nach einem der Ansprüche 1 bis 3,
wobei die Vorsprünge (15, 15') eines Blechsegmentes (19, 19') zu den Vorsprüngen (15, 15') eines nachfolgend deckungsgleich angeordneten Blechsegmentes (19, 19') einen Versatz in Umfangsrichtung zueinander aufweisen.

5. Statorring nach einem der Ansprüche 1 bis 3,
wobei die Vorsprünge (15, 15') an den Blechsegmenten (19, 19') formidentisch abgeildet sind, und die hintereinander gestapelten Blechsegmente (19, 19') mit einem Versatz in Umfangsrichtung zueinander angeordnet sind.

6. Statorring nach Anspruch 1,
wobei das Stator-Blechpaket (17') mehrere in Ausnehmungen (31) angeordnete Kühlkörper (33, 33') mit daran radial vorstehenden Vorsprüngen (15, 15') aufweist.

7. Statorring nach Anspruch 6,
wobei die Kühlkörper (33, 33') teilweise in Umfangsrichtung des Statorringes (13) verlaufend in nutartigen Ausnehmungen (31) an den hintereinander gestapelten Blechsegmenten (29, 29') angeordnet sind.

8. Statorring nach Anspruch 6 oder 7,
wobei Vorsprünge (15, 15') unterschiedlicher Kühlkörper (33, 33') in Achsrichtung beabstandet zueinander angeordnet sind.

9. Statorring nach einem der Ansprüche 6 bis 8,
wobei die Kühlkörper (33, 33') aus einem Material bestehen, das eine höhere Wärmeleitfähigkeit aufweist als das Material für die Blechsegmente (19, 19', 29, 29'), wobei vorzugsweise die Wärmeleitfähigkeit des Materials für die Kühlkörper (33, 33') zur Wärmeleitfähigkeit W_{LK} des Materials für die Blechsegmente W_{LB} (19, 19', 29, 29') ein Verhältnis W_{LK}/W_{LB} im Bereich von 1,5 oder mehr, besonders bevorzugt 1,5 bis 3,5 aufweist.

10. Statorring nach einem der Ansprüche 6 bis 9,
wobei das Stator-Blechpaket (17') eine erste Gruppe Blechsegmente (29) und eine zweite Gruppe Blechsegmente (29') aufweist, wobei die Blechsegmente (29') der zweiten Gruppe eine zu den Blechsegmenten (29) der ersten Gruppe verringerte Blechhöhe zur Ausbildung der Ausnehmungen (31) aufweisen, wobei bevorzugt die Blechsegmente (29, 29') der ersten und zweiten Gruppe abwechselnd hintereinander angeordnet sind, wobei vorzugsweise die Blechsegmente (29') der zweiten Gruppe im Vergleich zu den Blechsegmenten (29) der ersten Gruppe nur aus dem ersten radialen Abschnitt (21) mit den Statornuten (23) und einem benachbart angeordneten magnetischen Joch (37) ausgebildet sind.

11. Statorring nach Anspruch 10,
wobei die Kühlkörper (33, 33') einen zwischen den Blechsegmenten (29) der ersten Gruppe zu klemmenden Fußabschnitt (39, 39') aufweisen, der Durchbrüche (41) zum Aufnehmen von Befestigungsmitteln (45) zum Fixieren der Kühlkörper (33, 33') mit den Blechsegmenten aufweist, wobei der Fußabschnitt (39, 39') bevorzugt ein Tiefenmaß in Achsrichtung hat, das größer als das Tiefenmaß der daran radial vorstehenden Vorsprünge (15, 15') ist.

12. Statorring nach einem der vorstehenden Ansprüche,
wobei der zweite radiale Abschnitt (25) der Blechsegmente (19, 19', 29, 29') mit seinen Vorsprüngen (15, 15') und/oder die Kühlkörper (33, 33') mit den daran vorstehenden Vorsprüngen (15, 15') jeweils den Außenumfang des Statorringes (13) ausbilden.

13. Statorring nach einem der vorstehenden Ansprüche,
wobei zwischen dem ersten und dem zweiten radialen Abschnitt (21, 25) an den Blechsegmenten (19, 19', 29, 29') ein Tragabschnitt angeordnet ist, mittels dem und/oder dem Fußabschnitt (39, 39') der Kühlkörper (33, 33') eine Tragstruktur für einen selbstragend ausgebildeten Statorring (13) ausgebildet ist.

14. Elektrischer Generator (1), insbesondere langsam drehender Synchron-Ringgenerator einer Windenergieanlage, mit
einem Generatorstator (3) und einem Generatorrotor (5), relativ drehbar zum Generatorstator (3),
wobei der Generatorstator (3) einen Statorring (13) nach einem der Ansprüche 1 bis 13 aufweist,
wobei vorzugsweise der Generatorrotor (5) als Innenläufer ausgebildet ist.

15. Windenergieanlage (100), insbesondere getriebelose Windenergieanlage, mit einem Turm (102),
einer auf dem Turm drehbar angeordneten Gondel (104),
einer drehbar an der Gondel gelagerten Nabe (106) mit einer Anzahl von Rotorblättern (108), und einem Generator (1) zur Bereitstellung elektrischer Energie, der einen mit der Nabe verbundenen Generatorrotor (3) und einen mit der Gondel verbundenen Generatorstator (5) aufweist,
**dadurch gekennzeichnet, dass** der Generator (1) nach Anspruch 14 ausgebildet ist, wobei vorzugsweise der Statorring (13) mit an seinem Außenumfang vorstehenden Kühlrippen (27) Bereiche der Außenkontur der Gondel (104) ausbildet.
